# FASCICULE DE BREVET EUROPEEN

(11) **EP 2 499 341 B1**
(45) Date de publication et mention de la délivrance du brevet: **13.04.2016**
(21) Numéro de dépôt: 10776360.9
(22) Date de dépôt: 10.11.2010
(51) Int. Cl.: F01D 25/28, F02C 7/20, F02K 1/80, F01D 25/16

(54) **ASSEMBLAGE POUR TURBOMACHINE D'AERONEF**
ANORDNUNG FÜR EIN FLUGZEUGTURBINENTRIEBWERK
ASSEMBLY FOR AN AIRCRAFT TURBINE ENGINE

(30) Priorité: 12.11.2009 FR 0957969
(43) Date de publication de la demande: 19.09.2012
(73) Titulaire: Snecma, 75015 Paris (FR)
(72) Inventeur: SEIZE, Guilhem, F-91100 Corbeil-Essonnes (FR); VINCENT, Thomas, Alain, Christian, F-91120 Palaiseau (FR)
(74) Mandataire: Ilgart, Jean-Christophe
(86) Numéro de dépôt international: PCT/EP2010/067183
(87) Numéro de publication internationale: WO 2011/058041

(56) Documents cités:
- WO-A1-84/02507
- FR-A1- 2 896 481
- GB-A- 2 119 859
- US-A- 6 092 987
- US-A1- 2009 175 716

## Description

La présente invention se rapporte à un assemblage pour turbomachine d'aéronef, de préférence du type turboréacteur.

Sur un tel turboréacteur, il est prévu une ou plusieurs structures annulaires métalliques de raccord destinées au raccordement de deux pièces, également annulaires. Tel est le cas par exemple pour la structure annulaire métallique de raccord entre une pièce aval formant structure d'inverseur de poussée, et une pièce amont formant enveloppe définissant intérieurement une surface de délimitation externe d'une veine annulaire secondaire, cette pièce amont étant dénommée « Outer Fan Duct », en anglais.

Dans ce cas, la structure de raccord présente, en demi-section quelconque, deux branches et une base formant un U s'ouvrant radialement par rapport à un axe longitudinal. En outre, lorsque l'une des pièces à raccorder est en matériau composite, la structure de raccord est habituellement complétée par une bride de fixation métallique boulonnée sur l'une des branches du U précité, et définissant elle-même un second U s'ouvrant longitudinalement afin de loger l'extrémité annulaire de la pièce en matériau composite.

La présence de cette bride de fixation additionnelle, ajoutée à celle des boulons permettant sa fixation, impacte fortement la masse globale de l'assemblage obtenu, à un point tel que le bénéfice résultant de l'emploi d'un matériau composite pour la pièce concernée est fortement contrebalancé.

Ce problème de masse s'accentue d'ailleurs lorsque les deux pièces à raccorder sont réalisées en matériau composite, puisqu'il faut alors prévoir deux brides de fixation distinctes, chacune boulonnée sur le U central de la structure de raccord.

Les documents WO 84/02507 et FR 2 896 481 divulguent des assemblages selon l'art antérieur.

Pour faire face à ce problème de masse, l'invention propose tout d'abord une structure annulaire métallique de raccord entre deux pièces, pour turbomachine d'aéronef, présentant en demi-section quelconque deux branches primaires et une base formant un premier U s'ouvrant radialement vers l'intérieur ou l'extérieur par rapport à un axe longitudinal de ladite structure annulaire, ainsi que deux branches secondaires formant avec l'une des deux branches primaires un second U s'ouvrant longitudinalement. Selon l'invention, les branches primaires et secondaires ainsi que la base du premier U sont réalisées d'une seule pièce.

Ainsi, en formant la structure annulaire de raccord d'une seule pièce / d'un seul tenant, il en résulte un gain en termes de masse, en particulier en raison du fait qu'il n'est plus nécessaire de réaliser un boulonnage du premier U sur le second U.

De préférence, la structure de raccord comporte en outre, en demi-section quelconque, deux branches tertiaires formant avec l'autre des deux branches primaires un troisième U s'ouvrant longitudinalement dans un sens opposé à celui du second U, et les branches primaires, secondaires et tertiaires ainsi que la base du premier U sont réalisées d'une seule pièce. Le second U reçoit une première pièce en matériau composite tandis que le troisième U peut lui recevoir une seconde pièce également préférentiellement en matériau composite. Alternativement, la seconde pièce pourrait être montée directement sur l'une des branches du premier U, par exemple par boulonnage, surtout dans le cas où elle est métallique.

L'invention a donc pour objet un assemblage pour turbomachine d'aéronef conformément à la revendication 1 comprenant la structure annulaire métallique décrite ci-dessus, ainsi qu'une première pièce annulaire réalisée en matériau composite, dont une extrémité annulaire est logée dans ledit second U. De préférence, comme évoqué ci-dessus, l'assemblage comporte en outre une seconde pièce annulaire réalisée en matériau composite, dont une extrémité annulaire est logée dans ledit troisième U.

Enfin, l'invention a également pour objet une turbomachine d'aéronef comprenant un assemblage tel que décrit ci-dessus, de préférence dans laquelle :
- ladite structure annulaire métallique de raccord est centrée sur l'axe longitudinal de la turbomachine ;
- ladite première pièce annulaire constitue des moyens formant enveloppe définissant intérieurement une surface annulaire de délimitation externe d'une veine secondaire de la turbomachine ; et
- ladite seconde pièce annulaire forme une structure d'inverseur de poussée.

Préférentiellement, la turbomachine comprend en outre un carter d'échappement relié à ladite structure annulaire métallique de raccord agencée radialement vers l'extérieur par rapport à ce carter d'échappement, par l'intermédiaire de bielles de liaison.

D'autres avantages et caractéristiques de l'invention apparaîtront dans la description détaillée non limitative ci-dessous.

Cette description sera faite au regard des dessins annexés parmi lesquels ;
- la figure 1 représente une vue schématique en demi-coupe longitudinale d'un turboréacteur à double flux pour aéronef, selon un mode de réalisation préféré de la présente invention ;
- la figure 2 représente une vue partielle en perspective d'une structure annulaire métallique de raccord équipant le turboréacteur montré sur la figure précédente ;
- la figure 3 représente une vue schématique en demi-coupe d'un assemblage du turboréacteur, comportant la structure annulaire métallique de raccord ; et
- la figure 4 montre une vue similaire à celle de la figure 3, avec l'assemblage se présentant sous la forme d'un autre mode de réalisation préféré de la présente invention.

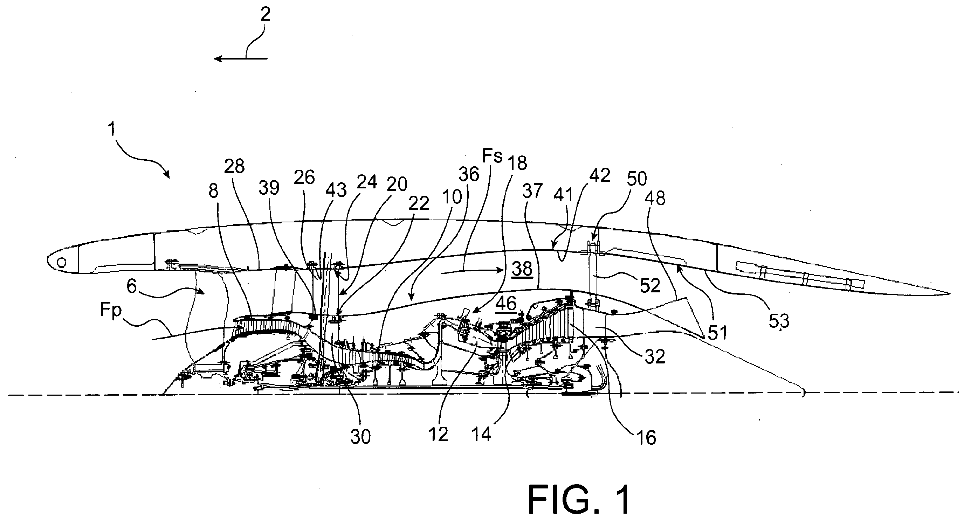

En référence tout d'abord à la figure 1, on peut apercevoir un turboréacteur d'aéronef 1 selon un mode de réalisation préféré. Dans toute la description qui va suivre, les termes « avant » et « arrière » sont à considérer par rapport à une direction d'avancement de l'aéronef provoquée par la poussée du turboréacteur, cette direction étant représentée schématiquement par la flèche 2. D'autre part, les termes « amont » et « aval » sont à considérer par rapport à une direction d'écoulement principale des gaz au sein du turboréacteur, contraire à la direction d'avancement 2 de l'aéronef.

Le turboréacteur 1, d'axe longitudinal 4, comporte d'amont en aval une soufflante 6, un compresseur basse pression 8, un compresseur haute pression 10, une chambre annulaire de combustion 12, une turbine haute pression 14 et une turbine basse pression 16. Les compresseurs, les turbines et la chambre de combustion constituent le générateur des gaz, qui est fermé en partie par un carter central 18 centré sur l'axe 4, et qui est traversé par un flux primaire Fp du turboréacteur.

Le compresseur haute pression 10 est ici centrifuge, et comprend donc un rouet centrifuge qui permet, au droit d'une extrémité aval de ce rouet, d'éloigner radialement au maximum le carter central 18 de l'axe 4.

Ce carter central 18 prolonge vers l'arrière un carter intermédiaire 20 équipé d'une virole intérieure 22 et d'une virole extérieure 24 concentriques, entre lesquelles sont agencés des bras structuraux 26 qui les relient. La virole extérieure 24 se situe dans le prolongement aérodynamique arrière du carter de soufflante 28, tandis que la virole intérieure 22 se situe radialement vers l'extérieur par rapport à l'extrémité avant du carter central 18, fixée sur un moyeu 30 du carter intermédiaire.

En outre, l'extrémité arrière du carter central 18 est prolongée par un carter d'échappement 32 situé en aval de la turbine basse pression 16.

L'ensemble des carters précités sont fixés les uns aux autres, afin de former conjointement une structure à travers laquelle transitent des efforts statiques et dynamiques.

Des premiers moyens 36 formant enveloppe sont agencés dans le prolongement aérodynamique arrière de la virole intérieure 22, en étant disposés autour du carter central 18. Ces moyens, dénommés en anglais « Inner Fan Duct », présentent extérieurement une surface annulaire 37 de délimitation interne d'une veine secondaire annulaire 38, traversée par le flux secondaire Fs du turboréacteur. La surface 37 se situe dans le prolongement aérodynamique arrière d'une autre surface 39 servant également à la délimitation interne de la veine secondaire annulaire 38, cette surface 39 étant définie par la virole intérieure 22. En outre, en aval de la surface 37 se trouve un mélangeur 48 dont la fonction connue réside dans le mélange des flux primaire Fp et secondaire Fs.

L'espace annulaire 46 laissé libre entre le carter central 18 et les premiers moyens formant enveloppe remplit la fonction de compartiment, dit « compartiment Core », dans lequel sont agencés des équipements.

Des seconds moyens 41 formant enveloppe sont agencés concentriquement et extérieurement aux premiers moyens 36 précités, dans le prolongement aérodynamique arrière de la virole extérieure 24. Ces moyens, dénommés en anglais « Outer Fan Duct », présentent intérieurement une surface annulaire 42 de délimitation externe de la veine 38. La surface 42 se situe dans le prolongement aérodynamique arrière d'une autre surface 43 servant également à la délimitation externe de la veine secondaire annulaire 38, cette surface 43 étant définie par la virole extérieure 24.

Les seconds moyens formant enveloppe 41, réalisés de préférence en matériau composite du type intégrant un mélange de résine et de fibres de verre et/ou de carbone, sont de préférence fixés en amont à la virole extérieure 24, et en aval à une structure annulaire métallique de raccord.

Cette structure de raccord, référencée 50 sur les figures, permet en effet de raccorder l'enveloppe 41 à une structure annulaire aval 51 formant inverseur de poussée, de préférence également réalisée en matériau composite du type intégrant un mélange de résine et de fibres de verre et/ou de carbone. La structure annulaire formant inverseur de poussée 51, tout comme la structure de raccord 50, est centrée sur l'axe 4. Elle définit intérieurement une surface 53 servant également à la délimitation externe de la veine secondaire annulaire 38, se situant dans le prolongement arrière de la surface 42.

Comme cela est visible sur la figure 1, le carter d'échappement 32 est relié par l'intermédiaire de bielles de liaison 52 à la structure de raccord 50 se situant au droit de ce carter 32, radialement vers l'extérieur.

Les bielles 52 sont en effet agencées dans un plan transversal du turboréacteur et traversent la première enveloppe 36 équipée d'échancrures pour le passage de ces bielles, dont l'extrémité radiale extérieure de chacune d'elles est montée sur la structure de raccord 50, et dont l'extrémité radiale intérieure est articulée sur le carter d'échappement 32.

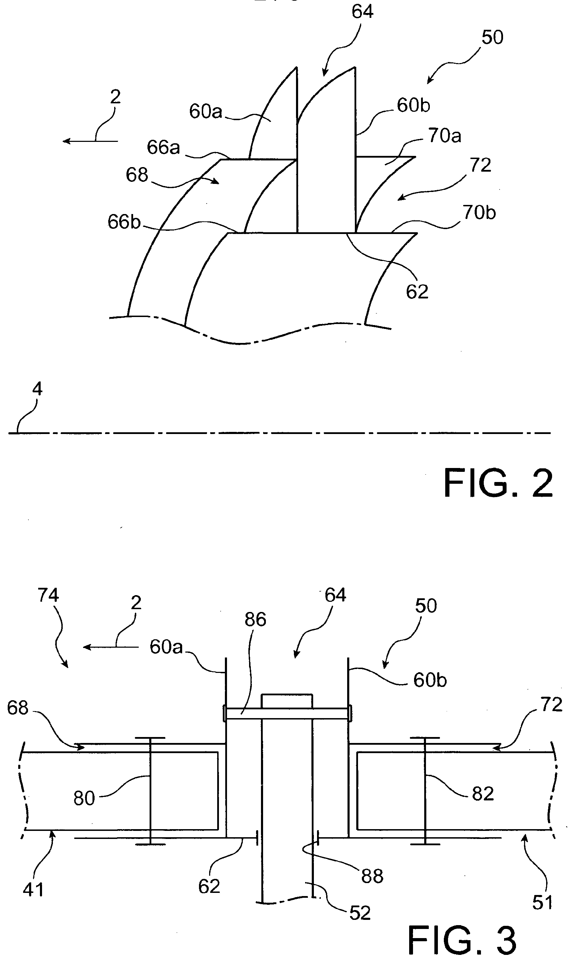

En référence à présent à la figure 2, il est montré un exemple de réalisation de la structure de raccord 50, réalisée d'une seule pièce, par exemple par moulage ou usinage d'un anneau plein.

La structure de raccord 50 comporte tout d'abord, en demi-section quelconque selon un plan radial et longitudinal, une partie centrale présentant deux branches primaires 60a, 60b et une base 62 formant conjointement un premier U 64 s'ouvrant radialement vers l'extérieur par rapport à l'axe longitudinal 4. La base 62 s'étend longitudinalement, alors que les branches 60a, 60b s'étendent radialement.

La structure de raccord 50 comporte également deux branches secondaires 66a, 66b formant avec la partie radialement interne de la branche primaire 60a un second U 68 s'ouvrant longitudinalement, vers l'avant. De manière analogue, la structure de raccord 50 comporte aussi deux branches tertiaires 70a, 70b formant avec la partie radialement interne de la branche primaire 60b un troisième U 72 s'ouvrant longitudinalement, vers l'arrière.

Dans le mode de réalisation représenté, les branches 66b, 70b et la base 62 située entre celles-ci forment une même ligne droite continue, parallèle à l'axe 4.

La figure 3 montre l'assemblage 74 intégrant la structure de raccord 50 qui vient d'être décrite en référence à la figure 2, ainsi que l'enveloppe 41 et la structure d'inverseur de poussée 51. En effet, l'extrémité annulaire aval de l'enveloppe 41 est logée dans l'espace annulaire défini par le second U 68, et fixée à ce dernier par des boulons radiaux traversants 80 ou similaires. De la même façon, l'extrémité annulaire amont de la structure d'inverseur de poussée 51 est logée dans l'espace annulaire défini par le troisième U 72, et fixée à ce dernier par des boulons radiaux traversants 82 ou similaires. Sur cette même figure 3, on peut apercevoir que l'extrémité radiale extérieure des bielles de liaison 52 est articulée sur le premier U 64 grâce à des axes longitudinaux 86 montés à leurs extrémités sur les branches primaires 60a, 60b. Pour ce faire, des orifices appropriés 88 sont ménagés dans la base 62, afin de laisser passer les bielles 52.

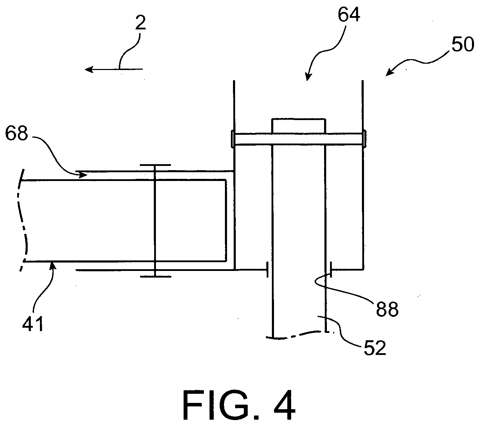

Une alternative de réalisation montrée sur la figure 4 montre une structure de raccord 50 n'étant pas pourvu du troisième U, cette alternative étant préférée lorsque la structure formant inverseur de poussée 51 peut être directement montée sur la branche primaire aval 60b, par exemple par boulonnage. Cela est notamment le cas lorsque la structure 51 est métallique.

De manière analogue, il pourrait être prévu de conserver uniquement le troisième U et de supprimer le second, lorsque l'enveloppe 41 peut être directement montée sur la branche primaire amont 60a, par exemple par boulonnage.

Bien entendu, diverses modifications peuvent être apportées par l'homme du métier à l'invention qui vient d'être décrite, uniquement à titre d'exemples non limitatifs.

## Revendications

1. Assemblage (74) pour turbomachine d'aéronef comprenant une structure annulaire métallique (50) de raccord entre deux pièces, ainsi qu'une première pièce annulaire (41) réalisée en matériau composite, ladite structure annulaire métallique (50) de raccord entre deux pièces présentant en demi-section quelconque deux branches primaires (60a, 60b) et une base (62) formant un premier U (64) s'ouvrant radialement par rapport à un axe longitudinal (4) de ladite structure annulaire, ainsi que deux branches secondaires (66a, 66b) formant avec l'une des deux branches primaires un second U (68) s'ouvrant longitudinalement,
**caractérisé en ce que**
les branches primaires (60a, 60b) et secondaires (66a, 66b) ainsi que la base (62) du premier U sont réalisées d'une seule pièce, et **en ce qu'**une extrémité annulaire de la première pièce (41) est logée dans ledit second U (68).

2. Assemblage selon la revendication 1, **caractérisé en ce que** la structure (50) comporte en outre, en demi-section quelconque, deux branches tertiaires (70a, 70b) formant avec l'autre des deux branches primaires un troisième U (72) s'ouvrant longitudinalement dans un sens opposé à celui du second U (68), et **en ce que** les branches primaires (60a, 60b), secondaires (66a, 66b) et tertiaires (70a, 70b) ainsi que la base (62) du premier U sont réalisées d'une seule pièce.

3. Assemblage selon la revendication 1 ou la revendication 2, comportant en outre une seconde pièce annulaire (51) réalisée en matériau composite, dont une extrémité annulaire est logée dans ledit troisième U (72).

4. Turbomachine (1) d'aéronef comprenant un assemblage (74) selon l'une quelconque des revendications précédentes.

5. Turbomachine selon la revendication 4, dans laquelle :
- ladite structure annulaire métallique de raccord (50) est centrée sur l'axe longitudinal (4) de la turbomachine ;
- ladite première pièce annulaire constitue des moyens (41) formant enveloppe définissant intérieurement une surface annulaire (42) de délimitation externe d'une veine secondaire (38) de la turbomachine ; et
- ladite seconde pièce annulaire forme une structure d'inverseur de poussée (51).

6. Turbomachine selon la revendication 4 ou la revendication 5, comprenant en outre un carter d'échappement (32) relié à ladite structure annulaire métallique de raccord (50) agencée radialement vers l'extérieur par rapport à ce carter d'échappement, par l'intermédiaire de bielles de liaison (52).

## Patentansprüche

1. Anordnung (74) für ein Flugzeug-Turbinentriebwerk, die einen metallenen, ringförmigen Aufbau (50) zur Verbindung zwischen zwei Teilen umfasst, sowie ein erstes ringförmiges Teil (41), das aus Verbundwerkstoff hergestellt ist, umfasst, wobei dieser metallene, ringförmige Aufbau (50) zur Verbindung zwischen zwei Teilen in einem beliebigen halben Schnitt zwei erste Schenkel (60a, 60b) und eine Basis (62) aufweist, welche ein erstes U (62) bilden, das sich, bezogen auf eine Längsachse (4) des genannten ringförmigen Aufbaus, in radialer Richtung öffnet, sowie zwei zweite Schenkel (66a, 66b) aufweist, die mit einem der beiden ersten Schenkel ein zweites U (68) bilden, das sich in Längsrichtung öffnet,
**dadurch gekennzeichnet,**
**dass** die ersten Schenkel (60a, 60b) und zweiten Schenkel (66a, 66b) sowie die Basis (62) des ersten U in einem Stück ausgeführt sind und dass ein ringförmiges Ende des ersten Teils (41) in dem genannten zweiten U (68) aufgenommen ist.

2. Anordnung nach Anspruch 1,
**dadurch gekennzeichnet,**
**dass** der Aufbau (50) ferner in einem beliebigen halben Schnitt zwei dritte Schenkel (70a, 70b) aufweist, die mit dem anderen der beiden ersten Schenkel ein drittes U (72) bilden, das sich in entgegengesetzter Längsrichtung zu der des zweiten U (68) öffnet, und dass die ersten Schenkel (60a, 60b), die zweiten Schenkel (66a, 66b) und die dritten Schenkel (70a, 70b) sowie die Basis (62) des ersten U in einem Stück ausgeführt sind.

3. Anordnung nach Anspruch 1 oder Anspruch 2, die ferner ein zweites ringförmiges Teil (51), das aus Verbundwerkstoff hergestellt ist, umfasst, dessen eines ringförmiges Ende in dem genannten dritten U (72) aufgenommen ist.

4. Flugzeug-Turbinentriebwerk (1), das eine Anordnung (74) nach einem der vorherigen Ansprüche aufweist.

5. Turbinentriebwerk nach Anspruch 4, bei dem
- der genannte metallene, ringförmige Verbindungsaufbau (50) auf der Längsachse (4) des Turbinentriebwerks zentriert ist;
- das genannte erste ringförmige Teil Mittel (41) darstellt, die einen Mantel bilden, welcher innen eine ringförmige Oberfläche (42) zur äußeren Begrenzung einer Strömungsbahn (38) des Turbinentriebwerks aufweist; und
- das genannte zweite ringförmige Teil einen Schubumkehr-Aufbau (51) bildet.

6. Turbinentriebwerk nach Anspruch 4 oder Anspruch 5, das ferner ein Auslassgehäuse (32) aufweist, das mit dem genannten metallenen, ringförmigen Verbindungsaufbau (50) verbunden ist, welcher bezogen auf dieses Auslassgehäuse radial nach außen hin vermittels Verbindungsstangen (52) angebracht ist.

## Claims

1. An assembly (74) for an aircraft turbomachine comprising a metallic annular connection structure (50) between two parts, and a first annular part (41) made of a composite material, said metallic annular connection structure (50) between two parts, with an arbitrary half-section comprising two primary branches (60a, 60b) and a base (62) forming a first U (64) opening up in the radial direction from a longitudinal axis (4) of said annular structure, and two secondary branches (66a, 66b) forming a second U (68) with one of the two primary branches opening up in the longitudinal direction,
**characterised in that**
the primary branches (60a, 60b) and secondary branches (66a, 66b) and the base (62) of the first U are made in a single piece, and **in that** an annular end of the first part (41) is housed in said second U (68).

2. The assembly according to claim 1, **characterised in that** the structure (50), with an arbitrary half-section also comprises two tertiary branches (70a, 70b) combining with the other of the two primary branches to form a third U (72) opening up longitudinally in a direction opposite to the direction of the second U (68), and **in that** the primary branches (60a, 60b), secondary branches (66a, 66b) and tertiary branches (70a, 70b) and the base (62) of the first U are made in a single piece.

3. The assembly according to claim 1 or claim 2, also comprising a second annular part (51) made of a composite material, one annular end of which is housed in said third U (72).

4. An aircraft turbomachine (1) comprising an assembly (74) according to any one of the preceding claims.

5. The turbomachine according to claim 4, in which:
- said metallic annular connection structure (50) is centred on the longitudinal axis (4) of the turbomachine;
- said first annular part comprises means (41) forming an envelope whose internal face defines an annular external delimitation surface (42) of a secondary stream (38) of the turbomachine; and
- said second annular part forms a thrust inverter structure (51).

6. The turbomachine according to claim 4 or claim 5, also comprising an exhaust casing (32) connected to said metallic annular connection structure (50) arranged radially outwards from this exhaust casing, through connecting rods (52).
